# EUROPEAN PATENT APPLICATION

(11) **EP 4 790 572 A1**
(43) Date of publication of application: **12.08.2026**
(21) Application number: 25315042.9
(22) Date of filing: 11.02.2025
(51) Int. Cl.: G06F 16/953

(54) **AUTOMATED INTERACTING WITH WEB SITES**

(71) Applicant: Amadeus S.A.S., 06410 Biot (FR)
(72) Inventor: Jerbi, Hajer, 06410 Biot (FR); Marragony, Salvatore, 06410 Biot (FR); Boudia, Mourad, 06410 Biot (FR); Devaux, Yannick, 06410 Biot (FR)
(74) Representative: Samson & Partner Patentanwälte mbB

(57) **Abstract**

A method of interacting with web sites is provided. The method comprises receiving an input defining a job to be performed and determining one or more tasks on one or more web sites required to perform the job. For each of the one or more tasks, the method further comprises identifying, by a supervisor agent, one or more atomic processes required to perform the task on a web site. And for each of the one or more atomic processes, the method further comprises instructing, by the supervisor agent, a worker agent to perform the atomic process, and determining, by the worker agent, a function call relating to the atomic process for interacting with the web site. The supervisor agent and the worker agent are based on multimodal generative artificial intelligence models. A corresponding assistance system and computer program are provided, too.

## Description

### FIELD

The present disclosure relates to web site interaction, in particular, to interacting with web sites supported by a plurality of agents based on multimodal generative artificial intelligence models.

### BACKGROUND

Interacting with web sites is - at least to a large extent - a manual and time-consuming process. In the last years, personal assistants have been developed that leverage generative artificial intelligence and large language models to provide automatizing of natural, context-aware, and personalized interactions. These personal assistants already can browse the web and perform operations such as collecting information, buying, or booking products.

However, most of these assistants require specific access to web site information, which is often not available, and can only be used for dedicated web sites. For example, some web sites do not provide any additional (meta) information beyond what is displayed. The web sites and the application programming interfaces (APIs) are, thus, often basic, which makes it complex to access the content or to integrate service access in a general manner. Therefore, existing solutions of assistants for interacting with web sites show poor quality and limited capability to adapt to different types of websites.

Hence, improved methods and systems for automatizing interactions with web sites are required.

### SUMMARY

In this context, according to a first aspect, a method of interacting with web sites is provided. The method comprises receiving an input defining a job to be performed and determining one or more tasks on one or more web sites required to perform the job. For each of the one or more tasks, the method further comprises identifying, by a supervisor agent, one or more atomic processes required to perform the task on a web site. And for each of the one or more atomic processes, the method further comprises instructing, by the supervisor agent, a worker agent to perform the atomic process, and determining, by the worker agent, a function call relating to the atomic process for interacting with the web site. The supervisor agent and the worker agent are based on multimodal generative artificial intelligence models. A corresponding assistance system and computer program are provided, too.

In some embodiments, the supervisor agent and the worker agent receive a system prompt and an instruction prompt as input, wherein the system prompt defines behavioural guidelines and the instruction prompt defines what job, task, or atomic process to perform. In some further embodiments, the instruction prompt of the supervisor agent and the worker agent comprise a screenshot of the web site comprising bounding boxes of elements on the web site. In yet further embodiments, the screenshot of the web site in the instruction prompt of the worker agent further comprises labels assigned to the bounding boxes, wherein function calls relating to web site interactions comprise a label as argument.

In embodiments, the supervisor agent is one of multiple supervisor agents and is specialized for performing the task and/or for a type of the web site, and/or wherein the worker agent is one of multiple worker agents and is specialized for performing the atomic process and/or for a type of the web site. In some embodiments, the method further comprises, in response to a change of the web site, to an error indication, and/or to an event in a workflow log, providing, by a feedback agent, feedback to the supervisor agent and/or the worker agent.

In embodiments, receiving the input and determining the one or more tasks are performed by an orchestrator agent, and the method further comprises, for each of the one or more tasks, instructing, by the orchestrator agent, the supervisor agent to perform the task. In some embodiments, the function call includes a web site interaction call to interact directly with the web site. In some further embodiments, the function call includes a feedback call to obtain feedback from the supervisor agent and/or a user.

In embodiments, the method further comprises interacting with a user to refine the input. In some embodiments, the method further comprises identifying and accessing, by the supervisor agent, external sources of information required to complete the task. In some embodiments, the method comprises displaying, on a user interface, a state of the task and/or a state of the atomic process. In some further embodiments, the method further comprises changing, by the supervisor agent, a zoom factor and/or a language of the web site before performing the task.

According to a second aspect, an assistance system of interacting with web sites is provided, which is configured to execute the methods as described herein.

According to a third aspect, a computer program is provided that comprises instructions which, when the program is executed by a computer, cause the computer to carry out the methods as described herein.

The foregoing paragraphs have been provided by way of general introduction and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements, in which:
Fig. 1 is a flow chart of a basic method according to the disclosure.
Fig. 2 shows an example of a supervisor agent and multiple worker agents according to an embodiment.
Fig. 3 depicts a variant comprising an orchestrator agent, multiple supervisor agents, and multiple worker agents.
Fig. 4 illustrates processes for interacting with a web site according to one embodiment.
Fig. 5 shows a simplified diagram of interacting with a web site supported by a supervisor agent and a worker agent.
Fig. 6 is diagrammatic representation of internal components of a computing system, which may implement all or part of the functionalities described herein.

### DETAILED DESCRIPTION

The present disclosure relates to methods and systems for interacting with web sites. The herein presented solution mimics a human-like web browsing to explore and interact with web sites. Compared to existing solutions, the methods and systems described within this disclosure are more stable, adaptable to different types of web sites, can autonomously take decisions based on the context of web sites and interactions even for new situations and web sites, and can perform different types of tasks.

The improvements are achieved by splitting different tasks required for a web site job in atomic processes, which may even be clustered and organized. In some embodiments, specialized worker agents for sets of tasks under the control of a supervisor agent. The supervisor agent is in charge of coordinating the global flow for the worker agents. In some embodiments, a dedicated feedback agent is provided to process the logs and provide feedback based on the error logs to correct the behavior of the worker and supervisor agents.

In summary, the approach discussed herein may is based on a multi-agent approach to split different tasks and/or different atomic processes. The tasks and processes are handled by multimodal generative artificial intelligent agents, which may leverage text and image processing. This architecture has the ability to correct errors when detecting them.

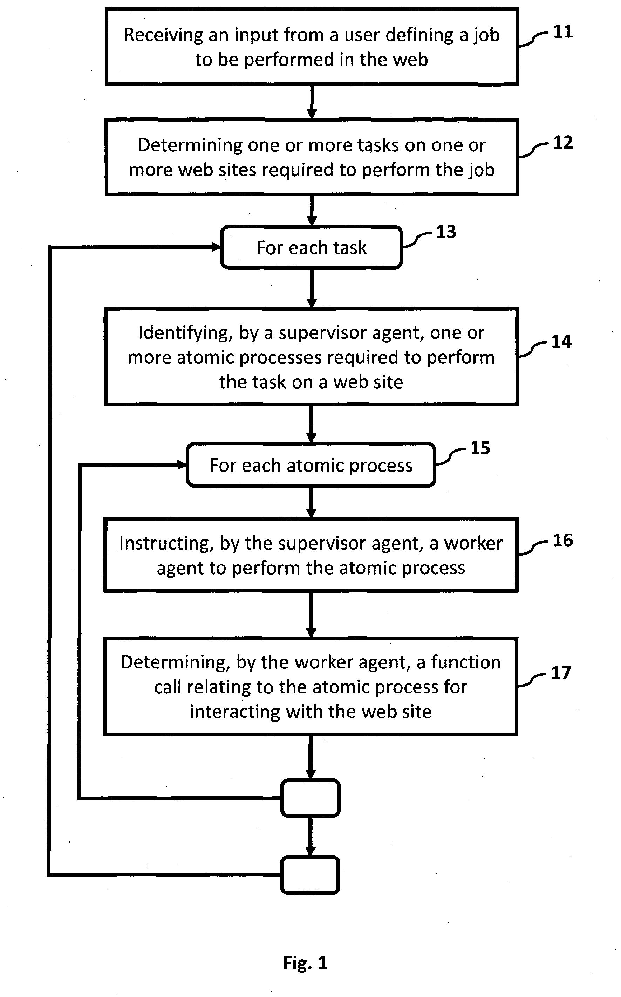

Fig. 1 is a flow chart of a basic method according to the disclosure. The method is implemented by a computer and provides an automatic interaction with web sites. The method is supported by a supervisor agent and a worker agent, which are based on multimodal generative artificial intelligence models. A software agent is a computer program that acts for a user or another program in a relationship of agency. This means, the supervisor agent may act for a user (or for a computer program or for another agent, e.g., an orchestrator agent) and the worker agent may act for the supervisor agent.

The agents described herein apply multimodal generative artificial intelligence models to perform tasks and atomic processes, e.g., for identifying atomic processes to be performed and/or outputting function calls in a correct manner, and the like. The multimodal generative artificial intelligence models of different supervisor agents and/or different worker agents may be different or differently fine-tuned. Using multiple worker agents (and/or supervisor agents) also allows performing at least some of the tasks required to perform a job in parallel. For example, if multiple worker agents are provided, which work in parallel, worker agents may put selected atomic process in a queue and an additional single tool agent may dequeue the atomic process and perform the function from the queue.

The method starts in box 11 with receiving an input defining a job to be performed, i.e., defining what should be achieved in the web. For example, a client application or a user may indicate what is needed to be done in the web, e.g., the Internet or any other Internet-like network. A user may, e.g., indicate that the user wants to book a flight to Berlin from Paris on 26 March 2025. This input may be received by the supervisor agent, another orchestration agent or any other umbrella program. Other examples of such jobs are, e.g., determining whether web sites are reachable, determining which web sites are accessible for people with disabilities, bot testing (e.g., is a tool a bot etc. or can a bot access the security part of a web. site), and the like.

The method proceeds to box 12 with determining one or more tasks on one or more web sites required to perform the job. In other words, the method determines which tasks are needed to fulfill the received job description. A job, thus, is composed of one or more tasks. A task defines an interaction with a web site in a specific manner. This determination may be performed by the supervisor agent, another orchestration agent or any other umbrella program.

For example, if the job description indicates to buy the cheapest offer of a laptop, the method may be determine that is first has to search on a search web site (e.g., Google^{®} or Bing^{®}) for offers of this laptop (first task), then go to the shop offering the cheapest version (second task), put the laptop in the basket (third task), go the check-out (fourth task) enter the personal details of the user (fifth task), and the like. It is noted that the method may also only determine the next task(s) at a time and update the determined one or more tasks subsequently. For example, a "Do you want to register to the newsletter?" question may appear in a web job at a time when interacting with a web site, for which a new task will be dynamically added.

For each of the one or more tasks (as depicted in box 13), the method then identifies, bia the supervisor agent, one or more atomic processes required to perform the task on a web site, which is indicated in box 14. A task is, thus, composed of one or more atomic processes. An atomic process is one simple and single interaction with a web site, e.g., clicking on a button, entering a surname in field, and the like.

Then, for each of the one or more atomic processes (as depicted with box 15), the method instructs, by the supervisor agent, the worker agent to perform the atomic process, which is shown in box 16. Hence, the supervisor agent identifies the atomic process and instructs a worker agent to perform the atomic process. For example, the supervisor agent identifies that a surname of the user should first be entered on the website and outputs such an instruction. This instruction may not comprise any information about where to input the surname and how to do this but may comprise the surname.

The worker agent then determines (as shown with box 17) a function call relating to the atomic process for interacting with the web site. For example, the worker agent may determine a specific field, in which the surname should be written and output a function call that initiates a function (e.g., a Paython program or the like) to input the surname in a field.

In a basic embodiment, the supervisor agent may receive, e.g., a user's task/question that identifies what to do in the web. The supervisor agent may be a large multimodal model (LMM). The supervisor agent may determine a next atomic action to be performed and provide this information to the worker agent. The provision may be based on a most recent annotation of a current webpage, e.g., through a screenshot as is described herein below. In some embodiments, the supervisor agent may ask a feedback agent (if such a feedback agent is provided) for help if needed.

The worker agent may receive the action (i.e., atomic process) to be performed from the supervisor agent. The worker agent may also be a large multimodal model (LMM). The worker agent may have access to tools (or a subset of tools). The worker agent may select a tool to be used to perform the current action and may also ask the supervisor agent or feedback agent (if such a feedback agent is provided) for help, e.g., if errors occur. The worker agent may also retry to find a suitable function call if an error occurs.

In some embodiments, the supervisor agent and the worker agent may receive a system prompt and an instruction prompt as input, wherein the system prompt defines behavioral guidelines and the instruction prompt defines what job, task, or atomic process to perform. For example, the supervisor agent's instruction prompt may be composed of a user request (e.g., book a flight from...) and a screenshot of the current state of a web site. The screenshot may also comprise bounding boxes around interactable elements. The worker agent's instruction prompt may be composed of the supervisor agent's output action (e.g., "Type Paris in the departure field") and the screenshot of the current state of the web site with labeled bounding boxes around interactable elements.

The supervisor agent may also receive a history of last operations performed, e.g., in the system prompt or the instruction prompt, in order to keep the flow of the execution. The supervisor agent's system prompt may also account for the presence of multiple worker agents. Therefore, the system prompt may comprise multiple worker agents' names and specifics of these worker agents. This enables the supervisor agent to call a specific worker agent for performing an atomic process.

As already indicated, the instruction prompt of the supervisor agent and the worker agent may comprise a screenshot of the web site comprising bounding boxes of elements on the web site. Thereby, the supervisor agent can identify interactable regions and, thus, what a worker could perform on this web site. The screenshot of the web site in the instruction prompt of the worker agent may also comprise labels assigned to the bounding boxes. This allows to formulate function calls (relating to web site interactions) that comprise a label as argument so that the function call clearly identifies what to do.

In some embodiments, the supervisor agent may be one of multiple supervisor agents and may be specialized for performing the task. Hence, different supervisor agents handle different tasks and/or for a type of the web site. For example, a first supervisor agent may be dedicated to searching the web, a second supervisor agent to booking events, and a third supervisor agent to inputting personal details of users, and the like. In such or different embodiments, the worker agent may be one of multiple worker agents and may be specialized for performing the atomic process and/or for a type of the web site. For example, a first worker agent may be dedicated to clicking on fields, a second worker agent to inputting text in fields, and a third worker agent to searching/scrolling on web sites, and the like.

In some embodiments, the method may also comprise an application of a feedback agent. The feedback agent may then provide, in response to a change of the web site, to an error indication, and/or to an event in a workflow log, feedback to the supervisor agent and/or the worker agent. Feedback also comprises help, this means, the feedback agent may help the supervisor agent whenever the supervisor agent needs help. The feedback agent is at least a large language model (LLM). The supervisor agent may ask the feedback agent and the feedback agent may also browse the web, read documentation, etc. to provide information to the supervisor agent. In some embodiments, the feedback agent may request a worker to output the question to the user that will send an additional input to be considered for the current job.

In some embodiments, receiving the input and determining the one or more tasks may be performed by an orchestrator agent, and the method, for each of the one or more tasks, may further comprise instructing, by the orchestrator agent, the supervisor agent to perform the task.

In the most basic form of the herein presented methods and systems, the supervisor agent is the agent that handles all the logic of the execution. Therefore, there may only be one single supervisor agent handling all the logic from the beginning to the end of the job. In this way, the supervisor agent may always receive in the system prompt the instructions for all the tasks during the execution of the job, even if some instructions become useless after a step is completed (e.g., the instructions on how to select the right result on a search page are useful only at the beginning but they may become unnecessary or irrelevant information in the prompt once the right web site has been accessed). Therefore, a decomposition of the supervisor agent into multiple supervisor agents may be sensible. Each of these supervisor agents may be specialized for one task of the web job execution.

For example, for a booking task, four main tasks may be identified: (1) The search to access the right web site, (2) the filling of the search form with all information about the flight/restaurant/hotel at the right web site, (3) the selection of a result that satisfies (most of) the requirements provided in a user request, and (4) the insertion of personal information in order to complete the booking. Therefore, each task may have a specific supervisor agent with a different system prompt that is fine-tuned to only perform the actions required for one specific task.

For the purpose to identify which supervisor agent to call, there may be a new agent provided on top. This agent may be called orchestrator or classifying agent. The goal of this orchestrator agent is understanding, in which of identified tasks (e.g., which of the four tasks above) of the job execution is currently in, and calling the right supervisor agent to perform this task. The orchestrator agent may then be the only agent to see the full job requirement, e.g., the user request, and may provide each supervisor agent only with the information from the user request that is necessary to complete that tasks (e.g. no need for the supervisor agent performing tasks 2 to know the personal information about the passengers of task 4). The orchestrator agent may be invoked only when the uniform resource locator (URL) of the web site changes. There may be no need to call the orchestrator agent after each atomic process (e.g., at tasks 2, every, time a new information is inserted in the form, the URL will not change until a search button is clicked).

In some embodiments, the function call may include a web site interaction call to interact directly with the web site. Such function calls may relate, e.g., to type a text, click an element, go back to a previous web site, scroll on the web site, solve CAPTCHA, and the like. Moreover, the function call may also or alternatively include a feedback call to obtain feedback from the supervisor agent and/or a user. A feedback call may also comprise answering a user's question or simply wait for feedback. Asking for feedback may also be used to capture and manage end-user consent (e.g., via a function to confirm decisions etc.).

The method may also comprise interacting with a user to refine the input. This may be supported by feedback function calls but may also be initiated by the supervisor agent or the orchestrator agent (of such an agent is provided). For example, if an agent determines that information is missing/required from the user, the agent may ask the user for this information.

In some embodiments, the method may further comprise identifying and accessing, by the supervisor agent, external sources of information required to complete the task. Additionally or alternatively, the orchestrator agent (if provided) may access the external sources. The external sources may comprise databases and or web sites that provide further information. For example, the external sources may comprise sources that store user profile information of the user, which is helpful to obtain personal data needed for, e.g., completing a booking. The external sources may also comprise sources of instructions that help to deal with specific web sites (e.g., API, function calls etc.).

In some embodiments, the method may further comprise displaying, on a user interface, a state of the task and/or a state of the atomic process. For example, the agentic approach described herein may be plugged into a conversational system (e.g., chatbot, multi-agent aggregator etc.) to explain the agents' decisions/actions and state of the job and/or corresponding tasks.

Moreover, the method may further comprise changing, by the supervisor agent, a zoom factor and/or a language of the web site before performing the task. This may be achieved via worker agents, i.e., the supervisor agent instructs the worker agent to change the zoom factor and/or a language.

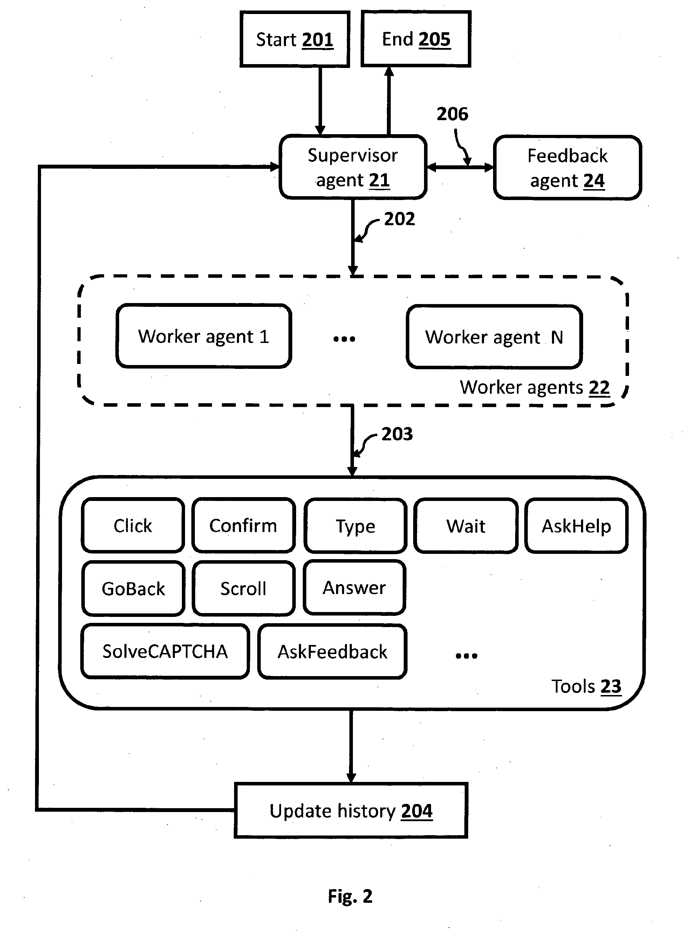

Now turning to Fig. 2, which shows an example of a supervisor agent 21 and multiple worker agents 22 according to an embodiment. Moreover, in this example, the worker agents 22 have access to multiple tools 23, which may be initiated by functions calls as described above. Finally, an optional feedback agent 24 is also provided in this example. The processes performed may start 201 with providing a job description (e.g., user request) to the supervisor agent 21. The supervisor agent 21 may - as described above - also receive a system prompt, defining how it should behave.

For example, the supervisor agent 21 may receive a system prompt similar to the following one: "You are {supervisor_name}, a skilled assistant guiding a robot called {worker_name} to finish a booking task. The booking can be for a flight, train, hotel, restaurant, or any other service. Your goal is to ensure that {worker_name} completes the task accurately and efficiently. To do so, you will receive a task from a User and a screenshot of the current state of the webpage. Interactable elements are surrounded by a colored bounding box. **ACTIONS** Actions available to {worker_name}: * Click a Web Element. * Type content in a textbox. * .. ** GUIDELINES: ** ..." The parameters {supervisor_name} and {worker_name} can be filled automatically and are used so that the supervisor agent 21 and the worker agent 22 can identify each other. If multiple worker agents 22 are provided, the prompt may comprise the information above for all worker argents 22. Moreover, the system prompt may also comprise special instructions for interacting with specific fields on the web site and the like.

The instruction prompt for the supervisor agent 21 may - in addition to the user request or job definition - also comprise a screenshot of the current state of the web site with bounding boxes to identify interactable fields.

The supervisor agent 21 determines which tasks to perform to fulfil the job according to the user request. The supervisor agent 21 then determines what atomic process should performed next and instructs 202 a worker agent 22 of the multiple (N) worker agents to perform the determined atomic process. In some embodiments, all worker agents 22 can perform all atomic processes and the supervisor agent 21 selects one arbitrary worker agent 22. Alternatively, the worker agents 22 may be specific for subsets of atomic processes and the supervisor agent 21 selects a worker agent 22 that is capable of performing the determined atomic process.

This instruction may also take the form of a system prompt and an instruction prompt. For example, the worker agent 22 may receive a system prompt similar to the following one: "You are {worker_name}, a robot browsing the web just like humans. You have to complete a specific action on a website as described by {supervisor_name}. **Your ONLY goal is to perform the action. YOU ARE NOT ALLOWED TO perform any actions different from {supervisor_name}'s task to complete. The only exception is to scroll if you don't see the web element {supervisor_name} is referring to. ** ### Workflow: 1. In each iteration, you will receive: - A screenshot of the current webpage state, labeled with **Numerical Label** at the top-left corner of each web element. - Texts describing the task and actions performed so far. 2. Use the visual and textual information to identify the **Numerical Label** of the web element requiring interaction.... ### Action Format: Each action MUST strictly follow this format: - Click [Numerical_Label] - Type [Numerical_Label]; [Content] ..." Hence, the worker agent 22 is informed how to create the function call for performing the atomic process. The system prompt may also detail further aspects how the worker agent 22 should interact with web sites, ask for help, format its output, and the like.

The instruction prompt for the worker agent 22 may - in addition to the atomic process definition and instruction from the supervisor agent 21 - also comprise a screenshot of the current state of the web site with bounding boxes to identify interactable fields and with labels for these bounding boxes, which are used in the function call output. The function call output from the worker agent 22 then activates 203 a tool 23, e.g., clicking on a web element. For example, the function call output may take the form of "Click [5]", which causes a tool, e.g., a computer program, to click on the web site element with label 5. Other tools, which can be activated by the function call outputs, may be Confirm, Type, Wait, AskHelp, GoBack, Scroll, Answer, SolveCAPTCHA, AskFeedback, and the like.

After interacting with the tool 23, a history of atomic processes and/or tasks is updated 204 so that the supervisor agent 21 is aware of the current state of the job and can decide what tasks/atomic processes to initiate next. If the job has been done, the overall process ends 205. Workers agents' 22 histories comprising the instructions received from the supervisor agent 21, the function calls and the observed output may be updated continuously.

As is apparent, during the job execution, a user may be asked for feedback (e.g., via a respective tool 23 by the worker agent 22 or directly by the supervisor agent 21). In addition, a feedback agent 24 may be provided, which can be asked to provide help (e.g., via a respective tool 23 by the worker agent 22 or by the supervisor agent 21) The worker agents 22 may, in . some embodiments, not contact the user or the feedback agent 24 directly and all communication to these entities is performed via the supervisor agent 21 in an indirect manner. For example, the worker agent 22 may transmit a question to the supervisor agent 21, which may ask the user accordingly.

Some examples of tools relate to Click (e.g., clicking on a web element and update a tab if needed), Confirm (e.g., ask the user for confirmation of payment, booking etc.), AskFeedback (e.g., ask the user for information w.r.t. first and last name, address etc.), Google (go to search website google.com), Wait (e.g., wait for the web site to load), AskHelp (e.g., ask the supervisor agent 21 for help), GoBack (e.g., go back to the previous web site), Scroll (e.g., scroll a web element of the whole page up or down), Type (e.g., type a text inside a web element), Answer (e.g., answer the user once an atomic process is completed), SolveCAPTCHA (e.g., solve a Completely Automated Public Turing test to tell Computers and Humans Apart (CAPTCHA)).

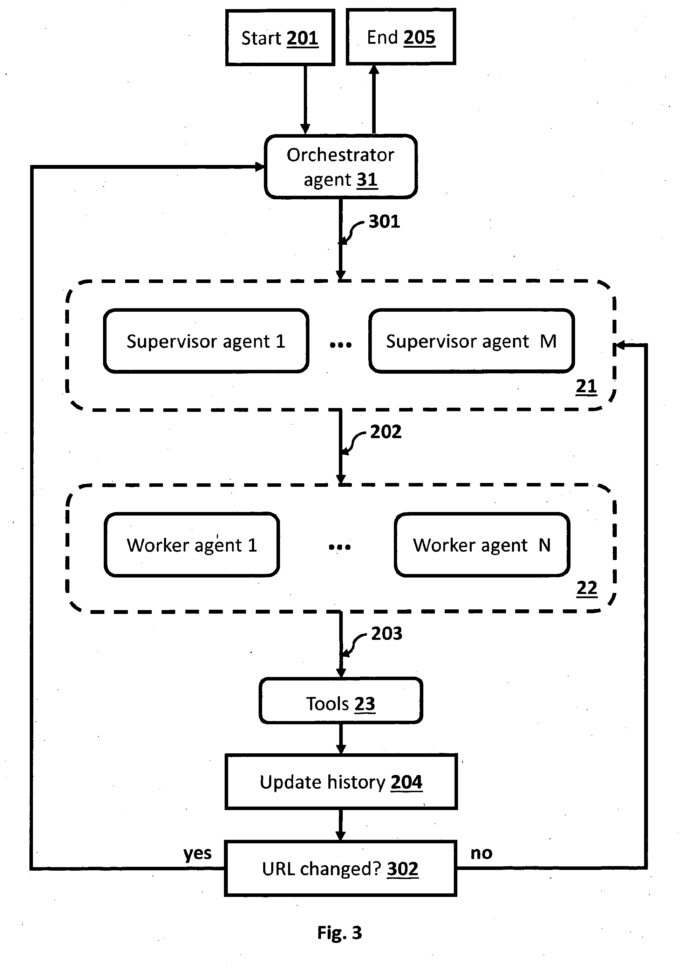

Fig. 3 depicts a variant comprising an orchestrator agent, multiple supervisor agents, and multiple worker agents. In this example, an orchestrator agent 31 (also denoted as classification agent) receives the input and determines the one or more tasks needed to perform the job. This enables to provide multiple supervisor agents 21, which can work on one web job in parallel and/or can be specialized for different tasks. The orchestrator agent 31 interacts with the user and receives the user request (start 201). The orchestrator agent 31 further determines and transmits 301 the system and instruction prompts to one or more determined supervisor agents 21. A supervisor agent 21 then processes one task on one web site, which is to be visited during the web site job.

The general processes are then similar to those of Fig. 2. The supervisor agent 21 then instructs 202 a worker agent 22 for performing atomic processes. The worker agent 22 activates 203 a tool 23. The history is updated 204. In this example, as long as the URL of the web site does not change, the no-branch of 302 indicates that the same supervisor agent 21 handles the task. If the URL changes, the yes-branch indicates of 302 indicates that the orchestrator agent 31 may select another supervisor agent 21 or end 205 the process if the web job has been finished. It is noted, that other criteria may in other examples also be used for determining whether to change the supervisor agent 21 or not.

The orchestrator agent 31 can call the right supervisor agent 21 because it has the full view of the web job. The orchestrator agent 31 may be the only agent that is aware of the complete user request, i.e., the complete web job definition. The orchestrator agent 31 may then provide each supervisor agent 21 only with the information that is necessary to complete a specific task. The orchestrator agent 31 may only be invoked when the URL of the web site changes. However, the orchestrator agent 31 may alternatively be invoked per other definitions of tasks, e.g., when a specific change from one web site to anther web site occurs.

Although not shown in Fig. 3, a feedback agent 24 may also be provided in this example. The feedback agent 24 may only be accessible by the orchestrator agent 31 but also by each of the supervisor agents 21. The orchestrator agent 31 may be, in some embodiment, be the only agent interacting with the user, thus, ensuring that the other agents 21 and 22 can focus on their tasks and atomic processes. This allows an internal error handling of the supervisor agents 21 and worker agents 22 without affecting the overall web job of the user.

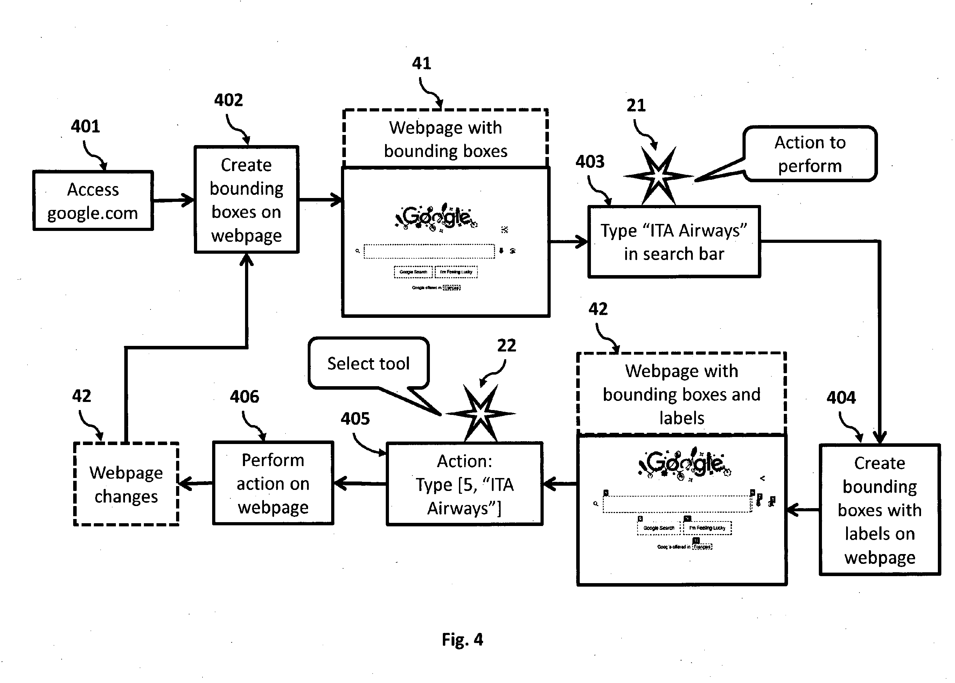

Fig. 4 illustrates processes for interacting with a web site according to one embodiment. In this example, a user request of "Book a one-way flight for two adults from Milan to London on the 20/12/2024 with ITA Airways" is considered. Fig. 4 shows a first task for fulfilling this request, namely, searching on google.com for a suitable flight. The first process 401 relates to accessing the search web site google.com. This may also have been invoked as a first atomic process by a worker agent 22 (not shown). Accessing google.com may be supported by a Python (or any other programming language) code, which is underlying a function call "Google" as explained above. However, in some other examples, google.com may generally be a starting web page for the web job.

Next process 402 relates to creating bounding boxes on the web site. This process may be supported by a JavaScript (or any other programming language) code and results in a screenshot of the web site with bounding boxes 41. The screenshot of the web site with bounding boxes 41 is then provided to the supervisor agent 21, which determines an atomic action (i.e., an atomic process) to perform. The output 403 of the supervisor agent 21 may, e.g., take the form "Type "ITA Airways" in the search bar". This is an instruction for the subsequent worker agent 22. To enable the worker agent 22 to output a corresponding function call, a next process 404 relates to create labels for the bounding boxes of the web site. This may again be supported by a JavaScript (or any other programming language) code. This results in a screenshot of the web site with bounding boxes and labels 42.

The screenshot of the web site with bounding boxes and labels 42 is then provided to the worker agent 22, which determines the function call. The output 405 of the worker agent 22 may, e.g., take the form "Type [5, "ITA Airways"]", with 5 indicating the bounding box of the web element, where "ITA Airways" should be entered. This function call then initiates the respective action on the web page, which may be supported by a Python (or any other programming language) code. Then, the web site may change (as shown with box 42), e.g., because it shows the search results.

Not shown in Fig. 4 but the processes then continue accordingly. Bounding boxes may be created around the search results. The supervisor agent 21 may then indicate to the worker agent 22 to click on the first search results (which may lead to the ITA web site). The worker agent 22 may determine a respective function call comprising the label of the bounding box of the first search result and so on.

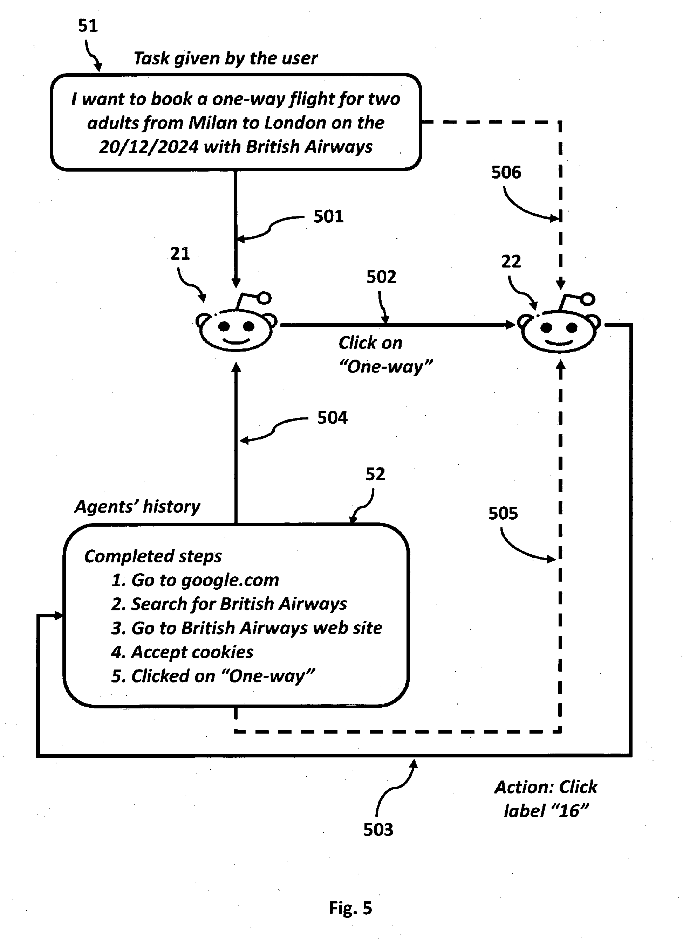

Fig. 5 shows a simplified diagram of interacting with a web site supported by a supervisor agent and a worker agent. The user request 51 may be "I want to book a one-way flight for two adults from Milan to London on the 20/12/2024 with British Airways". The user request 51 is provided to the supervisor agent 21 in 501. The example of Fig. 5 now assumes that the current web site is already the web site of British Airways. The supervisor agent 21 then indicates in 502 to the worker agent 22 to click on "One-way". The worker agent 22 determines the function call to perform the action as indicated with 503.

As can be seen in the history 52 of the agents, this is now the 5th completed atomic action, and may also be within the second task (1st task: Search for right web site; 2nd task: Search on flights of right web site). The supervisor agent 21 then obtains in 504 the updated history 52 to maintain the overview on the completion of the web job. In some embodiments, the worker agent 22 may also have access (as shown with arrows 505 and 506) to at least part of the history 52 and/or to at least part of the user request 51.

In sum, the herein presented solution for automatized interaction with web sites supported by an agentic approach of generative artificial intelligence models combines a visual approach and HTML code. The decision and action logics are split to dedicated agents (supervisor agents 21 and workers agents 22) to improve accuracy and flexibility of automatic interactions with web sited. The herein described methods and systems enable a flexibility in the definition and specialization of worker agents 22 (e.g., dedicated for tools, for types of web sites etc.) to optimize the process flow and adapt the personal assistant individually. The same is true for supervisor agents 21 when multiple of those are provided.

Moreover, using a dedicated feedback agent 24 that provides feedback on the workflow and influences decision-making of supervisor agents 21 and/or worker agents 22 improves the overall job automatizing and error handling thanks to an external point of view of this feedback agent 24. Implementing a step-by-step process allows real-time adaption to the content of the website(s) without additional training of any agents and autonomously management of the noisy contents of websites (cookies, newsletter registration, language detection...).

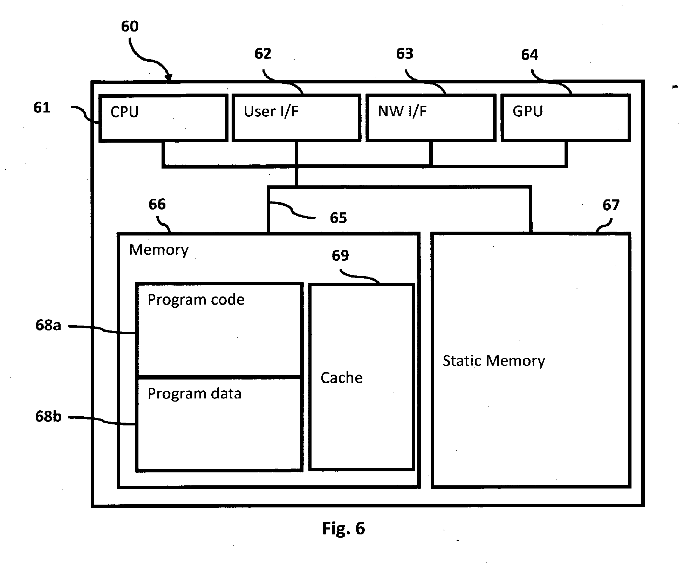

Finally, Fig. 6 is a diagrammatic representation of internal components of a computing system 60 implementing the methods and/or the functionality of one or more of the components as described herein. The computing system 60 includes at least one processor 61, a user interface 62, a network interface 63 and a main memory 66, that communicate with each other via a bus 65. Optionally, the computing system 60 may further include a static memory 67 and a disk-drive unit (not shown) that also communicate with each via the bus 65. A video display, an alpha-numeric input device and a cursor control device may be provided as examples of user interface 62. Furthermore, the computing system 60 may also comprise one or more graphics processing units (GPU) 64.

The GPUs 64 may also comprise a plurality of GPU cores or streaming multiprocessors, which comprise many different components, such as at least one register, at least one cache and/or shared memory, and a plurality of ALUs, FPUs, tensor processing unit (TPU) or tensor cores, and/or other optional processing units. GPUs can perform multiple simultaneous computations, thereby enabling the distributing of training processes and speeding up machine learning operations.

The main memory 66 may be a random-access memory (RAM) and/or any further volatile memory. The main memory 66 may store program code 68a and may also store additional program data 68b required for providing the functionalities described herein. Moreover, the main memory 66 may also include a cache 69 for caching instructions or temporary data needed for execution of the methods described herein.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, processes, operations, elements, and/or components, but do not preclude the presence or addition of one or more other features, integers, processes, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computer-implemented method of interacting with web sites comprising:
- receiving an input defining a job to be performed;
- determining one or more tasks on one or more web sites required to perform the job; and
- for each of the one or more tasks:
- identifying, by a supervisor agent, one or more atomic processes required to perform the task on a web site; and
- for each of the one or more atomic processes:
- instructing, by the supervisor agent, a worker agent to perform the atomic process; and
- determining, by the worker agent, a function call relating to the atomic process for interacting with the web site;
wherein the supervisor agent and the worker agent are based on multimodal generative artificial intelligence models.

2. The method of claim 1, wherein the supervisor agent and the worker agent receive a system prompt and an instruction prompt as input, wherein the system prompt defines behavioural guidelines and the instruction prompt defines what job, task, or atomic process to perform.

3. The method of claim 2, wherein the instruction prompt of the supervisor agent and the worker agent comprise a screenshot of the web site comprising bounding boxes of elements on the web site.

4. The method of claim 3, wherein the screenshot of the web site in the instruction prompt of the worker agent further comprises labels assigned to the bounding boxes, wherein function calls relating to web site interactions comprise a label as argument.

5. The method of any one of claims 1 to 4, wherein the supervisor agent is one of multiple supervisor agents and is specialized for performing the task and/or for a type of the web site, and/or wherein the worker agent is one of multiple worker agents and is specialized for performing the atomic process and/or for a type of the web site.

6. The method of any one of claims 1 to 5 further comprising:
- in response to a change of the web site, to an error indication, and/or to an event in a workflow log, providing, by a feedback agent, feedback to the supervisor agent and/or the worker agent.

7. The method of any one of claims 1 to 6, wherein receiving the input and determining the one or more tasks are performed by an orchestrator agent, and wherein the method, for each of the one or more tasks, further comprises instructing, by the orchestrator agent, the supervisor agent to perform the task.

8. The method of any one of claims 1 to 7, wherein the function call includes a web site interaction call to interact directly with the web site.

9. The method of any one of claims 1 to 8, wherein the function call includes a feedback call to obtain feedback from the supervisor agent and/or a user.

10. The method of any one of claims 1 to 9 further comprising interacting with a user to refine the input.

11. The method of any one of claims 1 to 10 further comprising identifying and accessing, by the supervisor agent, external sources of information required to complete the task.

12. The method of any one of claims 1 to 11 further comprising displaying, on a user interface, a state of the task and/or a state of the atomic process.

13. The method of any one of claims 1 to 12 further comprising changing, by the supervisor agent, a zoom factor and/or a language of the web site before performing the task.

14. An assistance system of interacting with web sites configured to execute the method of any one of claims 1 to 13.

15. A computer program comprising instructions which, when the program is executed by a computer, cause the computer to carry out the method according to any one of claims 1 to 13.
